# EUROPÄISCHE PATENTANMELDUNG

(11) **EP 4 686 544 A2**
(43) Veröffentlichungstag der Anmeldung: **04.02.2026**
(21) Anmeldenummer: 25190835.6
(22) Anmeldetag: 21.07.2025
(51) Int. Cl.: B29C 45/66

(54) **ANTRIEB FÜR EINE FORMSCHLIESSEINHEIT EINER SPRITZGIESSMASCHINE SOWIE DAMIT VERSEHENE FORMSCHLIESSEINHEIT UND SPRITZGIESSMASCHINE**

(30) Priorität: 31.07.2024 DE 102024121787
(71) Anmelder: ARBURG GmbH + Co KG, 72290 Loßburg (DE)
(72) Erfinder: BLETSCHER, Rainer, 72270 Baiersbronn (DE); HORNBERGER, Marc, 72175 Dornhan-Marschalkenzimmern (DE)
(74) Vertreter: RPK Patenanwälte Reinhardt und Kaufmann Partnerschaft mbB (Pforzheim)

(57) **Zusammenfassung**

Ein Antrieb für eine Formschließeinheit (10) einer Spritzgießmaschine (20) zur Verarbeitung von Kunststoffen und anderer plastifizierbarer Materialien umfasst eine betrieblich nicht bewegliche Verstellplatte (90), die an der Spritzgießmaschine (20) lagerbar ist, einen Antriebsmotor (80), ein Stirnradgetriebe (70) und einen Gewindetrieb (60), der eine rotierende Spindelmutter (50) und eine nicht rotierende Gewindespindel (40) aufweist und diese kraftschlüssig miteinander verbindet. Die nicht rotierende Gewindespindel (40) ist mit einem betrieblich beweglichen Kreuzkopf (30) der Formschließeinheit (10) verbindbar, die rotierende Spindelmutter (50) ist an der betrieblich nicht beweglichen Verstellplatte (90) gelagert und mit dem Stirnradgetriebe (70) verbunden, das mit dem Antriebsmotor (80) verbunden ist. Dabei sind der Gewindetrieb (60) und das Stirnradgetriebe (70) in einem abschließbaren Hohlraum (100) der Verstellplatte (90) angeordnet und der Gewindetrieb (60) und das Stirnradgetriebe (70) weisen eine gemeinsame Ölbadschmierung auf.

## Beschreibung

### Gebiet der Erfindung

Die vorliegende Erfindung betrifft einen Antrieb für eine Formschließeinheit einer Spritzgießmaschine zur Verarbeitung von Kunststoffen und anderen plastifizierbarer Materialien mit den Merkmalen gemäß dem Oberbegriff des Anspruchs 1, eine Formschließeinheit für eine Spritzgießmaschine mit den Merkmalen gemäß dem Oberbegriff des Anspruchs 10, eine Spritzgießmaschine zur Verarbeitung von Kunststoffen und anderer plastifizierbarer Materialien mit den Merkmalen gemäß dem Oberbegriff des Anspruchs 11 und ein Verfahren zum Betreiben einer Spritzgießmaschine mit den Merkmalen gemäß dem Oberbegriff des Anspruchs 12.

### Stand der Technik

Herkömmliche Antriebe für Formschließeinheiten weisen oft Hohlwellenmotoren auf, die durch zusätzlich benötige Messtechnik aufwändig und teuer sind, oder eine rotierende Gewindespindel auf, die mit einer Spindelmutter interagiert, die an einem Kreuzkopf befestigt ist. Der Antrieb wird dabei meist über einen Riemen nach außen auf einen Standardmotor geführt. Die derzeitig verfügbaren Antriebe sind insgesamt aufwändig, verschleißanfällig und benötigen viel Bauraum und engen dadurch die Bewegungsfreiheit anderer Bauteile der Formschließeinheit ein. Gerade in einer Anlaufphase der Spritzgießmaschine kann es bei diesen Lösungen zu temperaturbedingten Veränderungen im Antriebsstrang kommen, die sich auf die Ausschussquote der produzierten Bauteile auswirken können.

Aus der EP 0 164 419 B1 ist eine Schließvorrichtung zum Schließen von Formen einer Spritzgussvorrichtung mit einem Servomotor und einem Kraftübertragungsmechanismus bekannt, der einen Gewindebolzen und einen Spindelmuttermechanismus zum Umsetzen einer drehenden Kraft des Servomotors in eine linear wirkende Kraft aufweist. Die Schließvorrichtung enthält des Weiteren einen Gelenkmechanismus in Form eines Kniehebelmechanismus, der durch den Kraftübertragungsmechanismus betätigbar ist, um die Formen zu schließen. Wenn sich Gelenke des Gelenkmechanismus in einem gestreckten Zustand befinden, um dadurch die Formen zu schließen, ist der Servomotor mit einem Strom betreibbar, der geringer als ein normaler Betriebsstrom ist, um die Gelenke in dem gestreckten Zustand zu halten.

Aus der DE 199 64 087 B4 ist eine Schließeinrichtung für eine Spritzgießmaschine für Kunststoffe mit einer feststehenden Abstützplatte bekannt, die über einen Antrieb mit einer beweglichen Werkzeugaufspannplatte verbunden ist. Mindestens zwei in Reihe angeordnete Spindeln sind vorgesehen, wobei die erste Spindel mit einer Platte in Wirkverbindung steht und die zweite Spindel mit dem Antrieb, wobei die Gewindesteigungen beider Spindeln gegenläufig ausgeführt sind. Ein hülsenförmiges Kraftübertragungsteil ist konzentrisch zu den Spindeln angeordnet und jeweils kopfendig am Kraftübertragungsteil sind Spindelmuttern vorgesehen sind, die sowohl mit dem hülsenförmigen Kraftübertragungsteil als auch mit den Spindeln wirkverbunden sind. Die feststehende Abstützplatte ist über einen Kurbel- oder Kniehebelmechanismus, welcher durch eine von einem Hohlwellenmotor unter Zwischenschaltung einer Spindelmutter translatorisch bewegte Spindel antreibbar mit der beweglichen Werkzeugaufspannplatte verbunden. Der Hohlwellenmotor ist mit dem hülsenförmigen Kraftübertragungsteil sich axial bewegend verbunden. Am Motorgehäuse des Hohlwellenmotors ist mindestens ein Formelement vorgesehen, welches das Motorgehäuse trägt und dessen Verdrehen verhindert.

JP H 05345339 A offenbart eine Formspannvorrichtung, die umfasst: (a) eine an einer beweglichen Platte befestigte und aus einer Förderschnecke mit beispielsweise einem quadratischen oder trapezförmigen Gewinde bestehende Schraube; (b) ein mit einem Drehmotor und mit der Schraube in Eingriff stehendes Mutterelement; (c) eine Schmiervorrichtung zum Zuführen von Öl zu den Kontaktflächen der Gewinde der Schraube und des Mutterelements; (d) einem Formklemmelement, das in seiner axialen Richtung von einer beweglichen Rückplatte gehalten wird und um einen bestimmten Betrag bewegbar ist, um das Mutterelement drehbar zu halten; (e) eine Hydraulikflüssigkeitskammer zum Klemmen der Form, um das Formklemmelement während des Formschließvorgangs in Formschließrichtung zu bewegen; und (f) eine Hydraulikflüssigkeitskammer (A) zum Lösen der Form, um das Formklemmelement während des Formöffnungsvorgangs in Form-öffnungsrichtung zu bewegen. Dies ermöglicht eine Miniaturisierung der Vorrichtung, eine Erhöhung der stationären Belastbarkeit, eine präzise Ausführung des Formöffnungsvorgangs und eine Verringerung der Geräuschentwicklung.

KR 100360912 B1 zeigt eine Schließvorrichtung einer Spritzgießmaschine, die dazu dient, eine Schließstange in einem Schließgehäuse durch Vorwärts- und Rückwärtsantrieb eines Servomotors vorwärts und rückwärts zu betätigen. Sie umfasst einen oberen und einen unteren durchsichtigen Stopfen aus einem Glasmaterial, durch den das Innere der Schließvorrichtung sichtbar ist. Sie ist an einer Position unterhalb eines mittleren Abschnitts der Außenumfangsfläche des Schließgehäuses und an einer Position unterhalb des mittleren Abschnitts angebracht, um zu überprüfen, ob eine richtige Menge in das Schließgehäuse eingespritzt wird. Ein Ölbehälter ist zum Speichern und Zuführen von in das Schließgehäuse eingespritztem Öl vorgesehen, so dass die Spindelmutter entlang der Rollenschraube am oberen Teil des Schließgehäuses hin- und herbewegbar ist.

Die DE 10 2010 048 560 A1 offenbart eine Formschließeinheit einer Spritzgießmaschine zur Verarbeitung von Kunststoffen mit wenigstens einer zwischen stationärem Formträger und beweglichem Formträger aufnehmbaren Spritzgießform. Die Bewegung der Formträger erfolgt mittels wenigstens einer Kniehebelpaarung mit zwei Kniehebelmechanismen, die unabhängig voneinander von je einer Antriebseinheit in einer Schließrichtung angetrieben werden, wobei die Kniehebelmechanismen an einer Lagerplatte gelagert sind. Die Lagerplatte ist an der Spritzgießmaschine entlang von Führungen beweglich gelagert und die Antriebseinheiten sind an der beweglichen Lagerplatte gelagert, an der die Betätigungselemente für die wenigstens zwei Kniehebelmechanismen gelagert sind.

Aus der DE 10 2004 053 855 A 1 sind ein Verfahren zum Herstellen einer Spritzgießmaschine mit mindestens einem Direktantrieb sowie eine danach hergestellte Spritzgießmaschine. Der Direktantrieb weist einen Stator und einen in diesem drehbar aufnehmbaren oder aufgenommenen Rotor auf. Dabei wird ein Bauteil der Spritzgießmaschine mit einem statorlosen Gehäuse versehen, wobei der Innenraum des Gehäuses derart bemessen ist, dass der Stator in ihm aufnehmbar ist und ein gehäuseloser Stator nachträglich in das Gehäuse eingepasst wird.

JP 2016-088034 A zeigt eine Kniehebel-Formschließvorrichtung zur Herstellung von Formteilen. Die Vorrichtung weist ein zylindrisches Halteelement auf, dessen vorderes Ende an einer Rückseite einer Endplatte befestigt ist, während im Inneren ein Kugelumlaufspindelmechanismus untergebracht ist. Ein hohles Bauteil wird durch einen Elektromotor über eine Drehübertragungseinheit in Drehung versetzt. Ein Mutterteil wird durch einen Drehantrieb des hohlen Bauteils in Drehung versetzt. Eine Schraubenwelle wird durch den Drehantrieb des Mutterteils in Formschließrichtung angetrieben. Die Formschließbewegung bewirkt ein Antrieb des am vorderen Ende der Schraubenwelle befestigten Kreuzkopfes.

Die AT 12 643 U1 offenbart einen Spindeltrieb für eine Spritzgießmaschine, mit einer rotatorisch feststehenden Spindel und einer rotatorisch angetriebenen Spindelmutter, die relativ zueinander verfahrbar sind. Unterhalb der Spindel ist eine zweiteilige Abtropftasse mit einem ruhenden Teil und einem oberhalb des ruhenden Teils angeordneten und gemeinsam mit der Spindelmutter oder der Spindel verfahrbaren bewegbaren Teil angeordnet, wobei der ruhende Teil wenigstens eine Schmierölabflussöffnung aufweist.

### Darstellung der Erfindung

Der Erfindung liegt die Aufgabe zugrunde, einen Antrieb für eine Formschließeinheit einer Spritzgießmaschine anzugeben, der mit geringem Aufwand herstellbar und verschleißarm ist sowie eine platzsparende Bauweise aufweist, sowie ein Verfahren zum Betreiben einer Spritzgießmaschine anzugeben, durch das vorzugsweise jederzeit, insbesondere in einer Anlaufphase der Spritzgießmaschine die Ausschussquote der produzierten Bauteile minimiert wird.

Die Aufgabe wird mit einem Antrieb gemäß den Merkmalen des Anspruchs 1 gelöst. Dabei umfasst der Antrieb eine betrieblich nicht bewegliche Verstellplatte, die an einem Maschinenständer der Spritzgießmaschine lagerbar ist, einen Antriebsmotor, ein Stirnradgetriebe und einen Gewindetrieb, der eine rotierende Spindelmutter und eine nicht rotierende Gewindespindel aufweist und diese kraftschlüssig miteinander verbindet. Die nicht rotierende Gewindespindel ist mit einem betrieblich beweglichen Kreuzkopf der Formschließeinheit verbindbar, die rotierende Spindelmutter ist an der betrieblich nicht beweglichen Verstellplatte gelagert und mit dem Stirnradgetriebe verbunden, das mit dem Antriebsmotor verbunden ist. Dabei sind der Gewindetrieb und das Stirnradgetriebe in einem abschließbaren Hohlraum der Verstellplatte angeordnet und der Gewindetrieb und das Stirnradgetriebe weisen eine gemeinsame Ölbadschmierung auf. Der Antrieb und insbesondere das Stirnradgetriebe bieten den Vorteil, dass im Gegensatz zu einem im Stand der Technik verwendeten Riemen keine Verschleißteile im Antriebsstrang verbaut sind und über die quasi spielfreie Getriebelösung eine positionsgenauere Regelung der Antriebsbewegung möglich ist. Durch den Einsatz einer gemeinsamen Ölbadschmierung für den Gewindetrieb und das Stirnradgetriebe lässt sich der Verschleiß nochmals deutlich reduzieren und der Wartungsaufwand verbessern. Weiterhin ergeben sich durch das Ölbad thermische Vorteile durch eine Vergrößerung der Abstrahlfläche und eine bessere Temperaturverteilung.

Die Aufgabe wird auch mit einer Formschließeinheit für eine Spritzgießmaschine mit einem Antrieb nach einem der Ansprüche 1 bis 9 gemäß den Merkmalen des Anspruchs 10 gelöst. Dabei umfasst die Formschließeinheit einen erfindungsgemäßen Antrieb der mittels eines Kreuzkopfs mit einem ersten Ende eines Gelenkmechanismus verbunden ist, wobei ein zweites Ende des Gelenkmechanismus mit einem beweglichen Formträger verbunden ist. Der Antrieb, der Kreuzkopf, der Gelenkmechanismus, der bewegliche Formträger und der nicht bewegliche Formträger bilden dabei einen Formöffnungs- und Formschließungsmechanismus.

Weiterhin wird die Aufgabe auch mit einer Spritzgießmaschine zur Verarbeitung von Kunststoffen und anderer plastifizierbarer Materialien gemäß den Merkmalen des Anspruchs 11 gelöst. Dabei weist sie einen Antrieb nach einem der Ansprüche 1 bis 9 für eine Formschließeinheit nach Anspruch 10 auf.

Letztendlich löst auch ein Verfahren zum Betreiben einer Spritzgießmaschine gemäß den Merkmalen des Anspruchs 12 die Aufgabe. Dabei umfasst das Verfahren eine Spritzgießmaschine nach Anspruch 11, eine Formschließeinheit nach Anspruch 10 und einen Antrieb nach einem der Ansprüche 1 bis 9, wobei die Spritzgießmaschine eine Steuerung aufweist, die ausgebildet ist, die Temperatur der Ölbadschmierung zu regeln und dadurch die Spritzgießmaschine jederzeit, insbesondere in einer Anlaufphase der Spritzgießmaschine, in einem Prozesszustand zu halten, in dem eine von der Temperatur der Ölbadschmierung abhängige Ausschussquote von produzierten Bauteilen minimiert wird.

Vorteilhafte Weiterbildungen sind Gegenstand der abhängigen Ansprüche.

In einer bevorzugten vorteilhaft die Bauweise des Antriebs verbessernden bzw. die Ausführung des Antriebsmotors vereinfachenden Ausführungsform des Antriebs ist das Stirnradgetriebe auf einer der Formschließeinheit zugewandten Seite der rotierenden Spindelmutter angeordnet. Dadurch ist die rotierende Spindelmutter und der Antriebsmotor parallelgeschaltet, was vorteilhaft zu einer deutlichen verkürzten Bauweise führt.

Bevorzugterweise vereinfacht vorteilhaft eine weitere Ausführungsform des Antriebs dessen Bauweise dadurch, dass das Stirnradgetriebe auf einer von der Formschließeinheit abgewandten Seite der rotierenden Spindelmutter angeordnet ist. Dadurch kann auf die Verwendung eines Zwischenrads im Stirnradgetriebe verzichtet werden, wodurch der Antrieb kleiner wird und auch die Herstellung einer Übersetzung in einem Platz sparenden Bereich ermöglicht wird. Damit einher geht eine größere Übersetzung, was mit einem kleineren Drehmoment an der Motoreintriebsseite gleichzusetzen ist, so dass ein kleinerer Motor und Umrichter verwendet werden kann, was zur Kostenersparnis beiträgt. Außerdem ist die Integration in die Verstellplatte deutlich vereinfacht.

Dadurch, dass der Gewindetrieb und das Stirnradgetriebe von einem gemeinsamen Gehäuse umgeben sind, das in den abschließbaren Hohlraum der Verstellplatte einsetzbar ist, wird vorteilhaft in einer anderen Ausführungsform des Antriebs die Integration des in einem Gehäuse vormontierten Gewindetriebs und des Stirnradgetriebes in die Verstellplatte erleichtert, was auch deren Vorprüfbarkeit verbessert. Ein weiterer Vorteil dieser Ausführungsform ist, dass die vormontierte Einheit nur an ganz wenigen Verbindungspunkten einen direkten Kontakt mit der Verstellplatte aufweist und dass über eine optimale Auswahl der Verbindungspunkte vermieden wird, dass eine Verformung der Verstellplatte unter einem Schließkrafteinfluss der Formschließeinheit einen Einfluss auf die restlichen Teile des Antriebs ausübt.

Eine bevorzugte Ausführungsform des Antriebs verbessert dessen Bauweise dadurch, dass der Antriebsmotor mit dem Stirnradgetriebe entweder auf der der Formschließeinheit zugewandten Seite der rotierenden Spindelmutter oder der von der Formschließeinheit abgewandten Seite der rotierenden Spindelmutter verbunden ist. Dadurch kann je nach Art des Antriebs bzw. Ausführungsform der Spritzgießmaschine und nach Ausführung der sonstigen Bauteile der Formschließeinheit vorteilhaft jeweils ein optimal großer Bauraum innerhalb der Formschließeinheit bzw. der Spritzgießmaschine zur Verfügung gestellt werden.

Bevorzugt weist in einer weiteren die Ausführung des Antriebsmotors vereinfachenden Ausführungsform des Antriebs das Stirnradgetriebe mindestens ein Zwischenrad auf. Durch die Verwendung eines Zwischenrads ist vorteilhaft eine höhere Stirnradgetriebeübersetzung möglich, was eine einfachere Ausführung des Antriebsmotors ermöglicht.

Vorzugsweise ist das Stirnradgetriebe so eingerichtet ist, dass es einen Freiraum, vorzugsweise einen Freiraum im Zentrum des Stirnradgetriebes, aufweist, durch den die Gewindespindel hindurchtritt oder hindurchtreten kann. Die Verwendung des Stirnradgetriebes schafft dabei vorteilhaft die Möglichkeit, den Antriebsmotor seitlich zu versetzen und gleichzeitig Raum im Getriebe, vorzugsweise im Zentrum des Getriebes, zu schaffen, so dass die Gewindespindel in axialer Richtung durch das Getriebe durchtauchen kann. Vorzugsweise kann der Antriebsmotor parallel zur durchtauchenden Gewindespindel angeordnet werden, so dass durch Nutzung des freien Raums im Zentrum des Getriebes durch die Gewindespindel vorteilhaft die Baulänge der Formschließeinheit deutlich verringert werden kann.

In einer weiteren bevorzugten Ausführungsform des Antriebs wird vorteilhaft die Ausschussquote der produzierten Bauteile dadurch reduziert, insbesondere während einer Anlaufphase der Spritzgießmaschine, dass die gemeinsame Ölbadschmierung temperierbar ist. Die Spritzgießmaschine kann so schneller in ein Prozessgleichgewicht gebracht werden.

Bevorzugterweise verbessert vorteilhaft eine andere Ausführungsform des Antriebs dessen Zustandsüberwachung dadurch, dass die gemeinsame Ölbadschmierung Sensoren zur Überwachung der Temperatur, der Ölreinheit und/oder der Ölalterung aufweist. Damit kann rechtzeitig eine Wartung eingeleitet werden, wenn erkannt wird, dass der Zustand der Ölbadschmierung den Verschleiß innerhalb des Antriebs erhöhen könnte.

Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Die Erfindung wird nun anhand eines Ausführungsbeispiels näher erläutert. Es zeigen:
- Fig. 1: eine Gesamtansicht einer Spritzgießmaschine,
- Fig. 2: eine isometrische Ansicht der Formschließeinheit der Spritzgießmaschine gemäß Fig. 1,
- Fig. 3: eine Schnittdarstellung des Antriebs mit einem Stirnradgetriebe mit Zwischenrad am Körper der Spindelmutter, wobei das Stirnradgetriebe auf einer der Formschließeinheit zugewandten Seite der rotierenden Spindelmutter angeordnet ist sowie mit einer Ansicht in Richtung des Pfeiles A,
- Fig. 4: eine Schnittdarstellung durch Fig. 3 quer zur Maschinenlängsachse mit Darstellung des Raums für die Ölbadschmierung und einer Stirnradgetriebelösung mit Zwischenrad,
- Fig. 5: eine Schnittdarstellung des Antriebs mit einem Stirnradgetriebe in einem zweiten Ausführungsbeispiel ohne Zwischenrad, wobei das Stirnradgetriebe auf einer der Formschließeinheit abgewandten Seite der rotierenden Spindelmutter angeordnet ist, sowie mit einer Ansicht in Richtung des Pfeiles B,
- Fig. 5A: eine Schnittdarstellung des Antriebs mit einem Stirnradgetriebe in einem dritten Ausführungsbeispiel ohne Zwischenrad, wobei das Stirnradgetriebe und der Antriebsmotor auf einer der Formschließeinheit zugewandten Seite der rotierenden Spindelmutter angeordnet sind, sowie mit einer Ansicht in Richtung des Pfeiles B,
- Fig. 6: eine Schnittdarstellung des Antriebs in einem vierten Ausführungsbeispiel, wobei der Gewindetrieb und das Stirnradgetriebe in einem separaten Gehäuse angeordnet sind, sowie mit einer Ansicht in Richtung des Pfeiles C.

### Beschreibung bevorzugter Ausführungsbeispiele

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht. Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen.

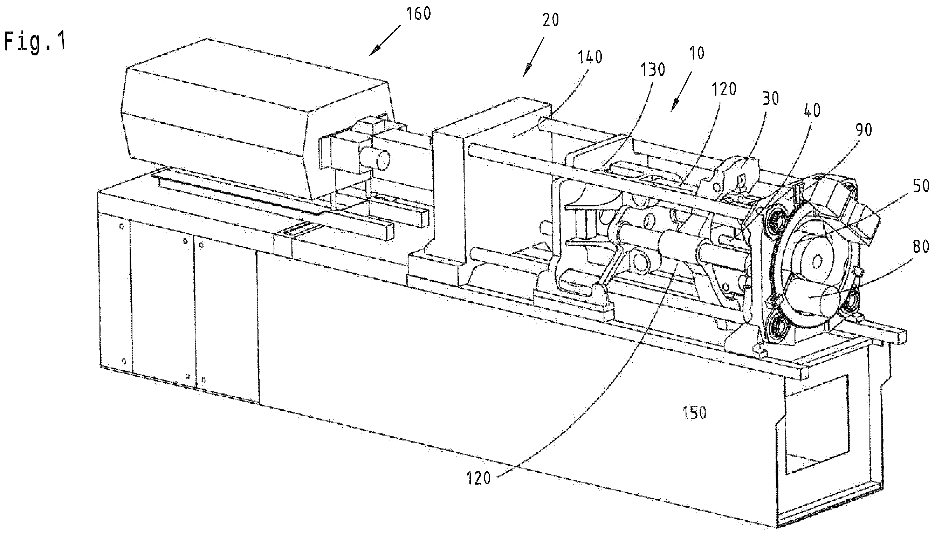

Fig. 1 zeigt eine Spritzgießmaschine 20 zur Verarbeitung von Kunststoffen und anderer plastifizierbarer Materialien mit einem Maschinenständer 150, einer auf dem Maschinenständer 150 gelagerten Spritzgießeinheit 160 und einer ebenfalls darauf gelagerten Formschließeinheit 10.

Aufbau und Betrieb einer Spritzgießmaschine sind dem Fachmann grundsätzlich bekannt. Der Spritzgießmaschine 20 werden Kunststoffe oder andere plastifizierbare Materialien zugeführt, die in einem Plastifizierzylinder der Spritzgießeinheit 20 gemischt, plastifiziert und homogenisiert werden. Während des Plastifizierungsvorgangs wird vor einem Fördermittel plastifiziertes Material aufdosiert. Im Anschluss wird durch eine Axialbewegung des Fördermittels das plastifizierte Material in einen Formhohlraum einer zeichnerisch nicht dargestellten Spritzgießform eingespritzt, die im Betriebszustand zwischen beweglichem Formträger 130 und nicht beweglichem Formträger 140 aufgenommen ist. Während des Einspritzvorgangs ist die Spritzgießform durch die Formschließeinheit 10 geschlossen. Sobald das eingespritzte plastifizierte Material im Formhohlraum ausgehärtet ist, wird mittels der Formschließeinheit 10 die Spritzgießform wieder geöffnet, sodass das fertige Spritzteil entnommen werden kann. Dieser Prozess erfolgt zyklisch.

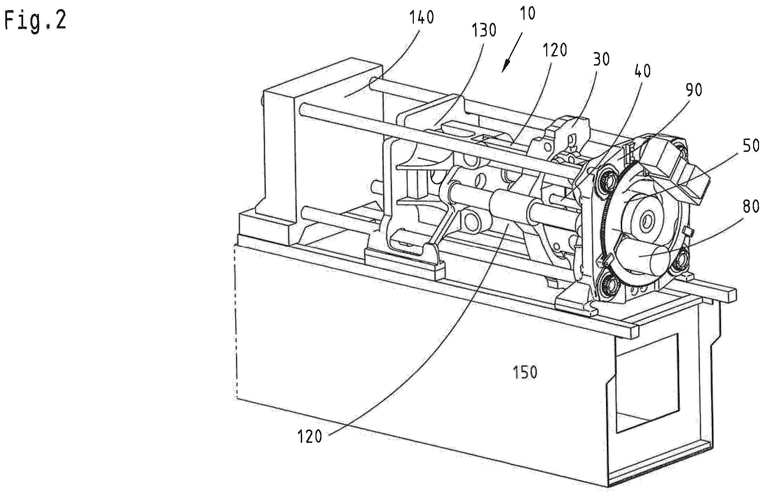

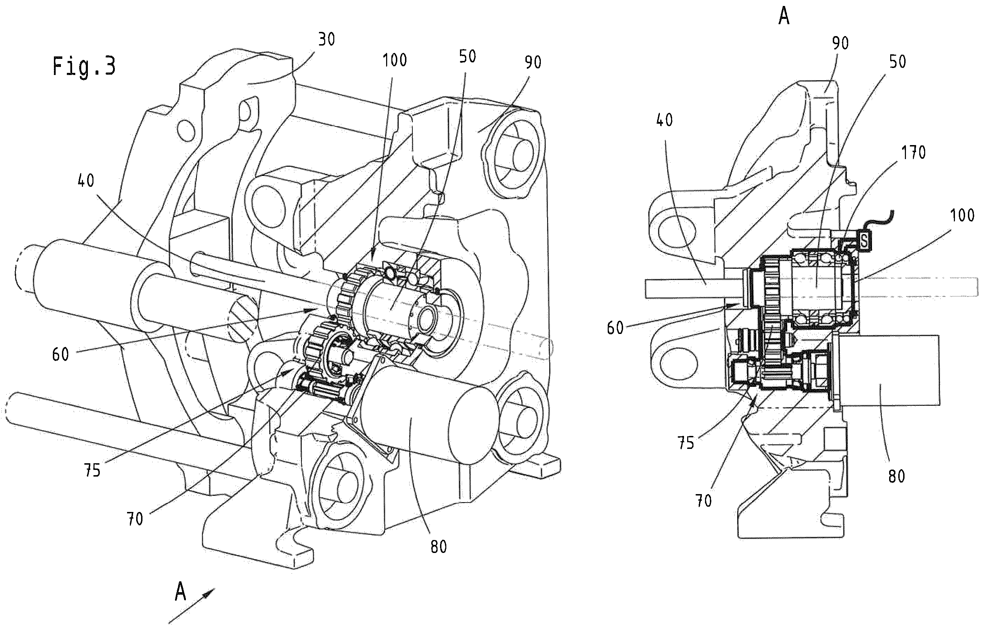

Fig. 2 zeigt einen Ausschnitt der Fig. 1 mit einem Teil des Maschinenständers 150 und der darauf gelagerten Formschließeinheit 10 mit ihrem Antrieb. Zusätzlich zur Fig. 2 ist in der Fig. 3 der Antrieb für die Formschließeinheit 10 der Spritzgießmaschine 20 im Detail dargestellt. Dieser umfasst eine betrieblich nicht bewegliche Verstellplatte 90, die an dem Maschinenständer 150 der Spritzgießmaschine 20 gelagert ist, einen Antriebsmotor 80, ein Stirnradgetriebe 70 und einen Gewindetrieb 60, der eine rotierende Spindelmutter 50 und eine nicht rotierende Gewindespindel 40 aufweist und diese kraftschlüssig miteinander verbindet. Dabei ist die nicht rotierende Gewindespindel 40 mit einem betrieblich beweglichen Kreuzkopf 30 der Formschließeinheit 10 verbindbar. Die rotierende Spindelmutter 50 ist an der betrieblich nicht beweglichen Verstellplatte 90 gelagert und mit dem Stirnradgetriebe 70 verbunden, das seinerseits mit dem Antriebsmotor 80 verbunden ist. Betrieblich beweglich bzw. nicht betrieblich beweglich bezieht sich dabei auf den Produktionsbetrieb der Spritzgießmaschine 20.

Die Verstellplatte 90 bzw. daran gelagerte Teile können während der Einrichtung der Spritzgießmaschine 20 zur Feineinstellung der Formschließeinheit 10 z. B. auch höhenverstellbar gegenüber dem Maschinenständer 150 sein. Der Gewindetrieb 60 und das Stirnradgetriebe 70 sind in einem abschließbaren Hohlraum 100 der Verstellplatte 90 angeordnet und der Gewindetrieb 60 und das Stirnradgetriebe 70 weisen eine gemeinsame Ölbadschmierung auf. Neben dem Vorteil der nahezu spielfreien und positionsgenauen Regelung des Antriebs, wird dadurch auch der Verschleiß und die Wartungsfrequenz vermindert.

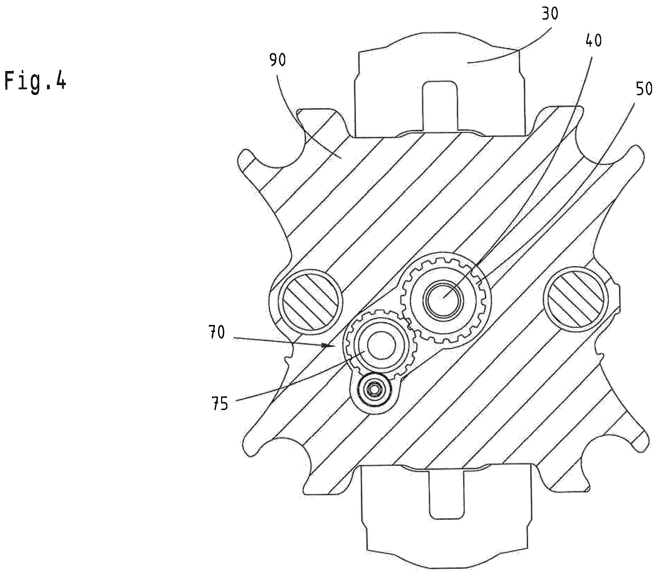

Vorteilhaft kann das Stirnradgetriebe 70 auf einer der Formschließeinheit 10 zugewandten Seite der rotierenden Spindelmutter 50 angeordnet sein, wie es die Fig. 3 und 4 zeigen. Dadurch ist die rotierende Spindelmutter und der Antriebsmotor parallelgeschaltet, was zu einer deutlich verkürzten Bauweise führt. Ein weiterer bauartbedingter Vorteil ist darin begründet, dass infolge der Zwischenradverwendung eine höhere Übersetzung im Getriebe möglich ist, was die Motorausprägung reduziert.

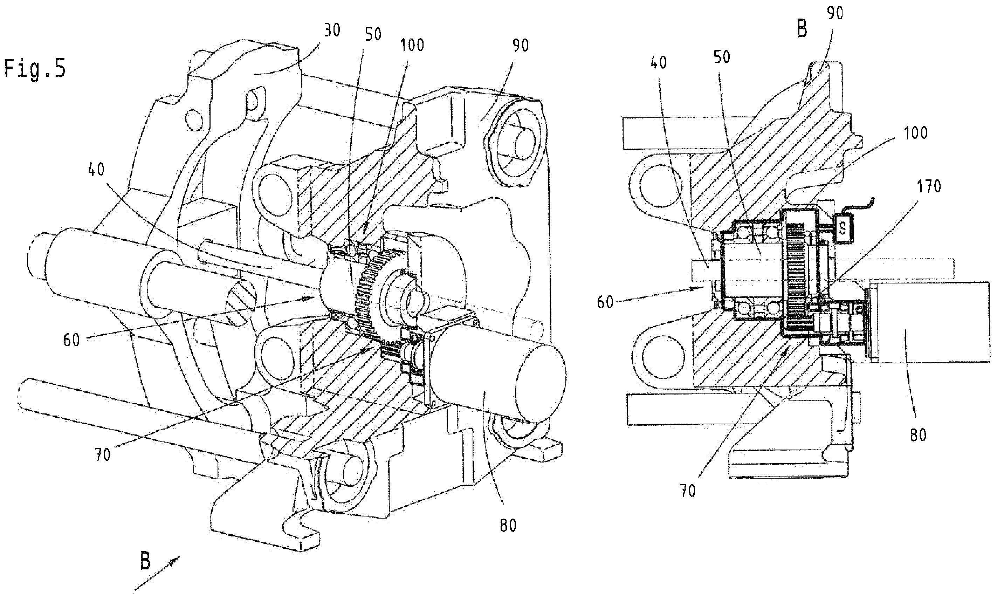

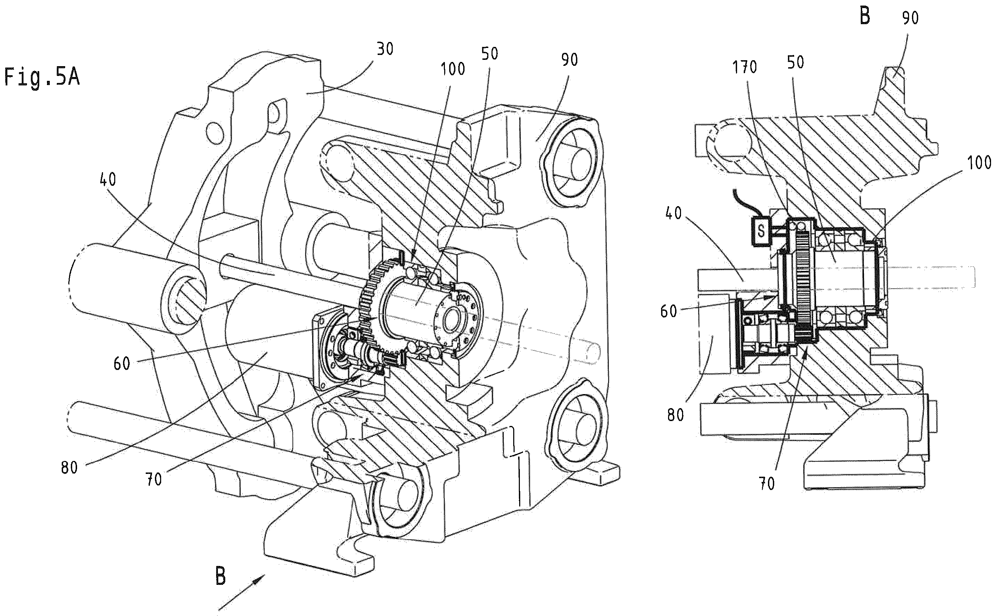

Das Stirnradgetriebe 70 kann aber auch auf einer von der Formschließeinheit 10 abgewandten Seite der rotierenden Spindelmutter 50 angeordnet sein, wie in Fig. 5 zu sehen. Die Übersetzung bzw. die Zahnräder, also nur das Ritzel und Abtriebsrad ohne ein Zwischenrad 75, werden dabei so gewählt, dass ein Abstand zwischen dem Antriebsmotor 80 und der nach hinten durchtauchenden Gewindespindel 40 gegeben ist. Die Verwendung eines weiteren Zwischenrads ist aber grundsätzlich möglich. Durch die Verbindung Ritzel zu Abtriebsrad lässt sich die Übersetzung in kleineren Bereichen realisieren, was aber trotzdem zu einem Downsizing des Antriebsstranges führt. Des Weiteren ist die Integration der Getriebetechnik in die Verstellplatte 90 deutlich vereinfacht, die Einheit wird quasi hinten aufgesetzt, und die Verstellplatte 90 muss nur minimal ausgehöhlt und somit nur in geringem Maße in ihrer Stabilität geschwächt werden.

Die Verwendung des Stirnradgetriebes 70 schafft zudem die Möglichkeit, den Antriebsmotor seitlich zu versetzen und gleichzeitig Raum im Getriebe, vorzugsweise im Zentrum des Getriebes, zu schaffen, so dass die Gewindespindel 40 in axialer Richtung durch das Getriebe durchtauchen kann (siehe gestrichelte Darstellung der Gewindespindel in den Figuren). Zudem kann der Antriebsmotor 80 parallel zur durchtauchenden Gewindespindel 40 angeordnet werden, so dass durch Nutzung des freien Raums im Zentrum des Getriebes durch die Gewindespindel die Baulänge der Formschließeinheit deutlich verringert werden kann.

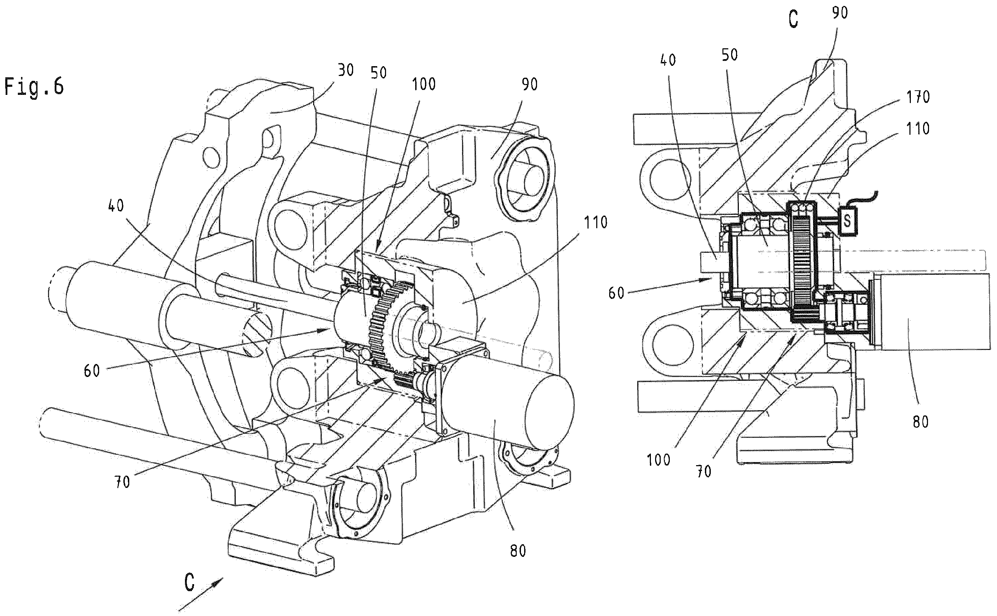

In einer weiteren vorteilhaften Ausführungsform des Antriebs gemäß Fig.6 sind der Gewindetrieb 60 und das Stirnradgetriebe 70 von einem gemeinsamen Gehäuse 110 umgeben, das in den abschließbaren Hohlraum 100 der Verstellplatte 90 einsetzbar ist. Der gesamte Antrieb kann somit als Modul in die Verstellplatte 90 eingesetzt werden, was deutliche Vorteile in Bezug auf die Prüfbarkeit und Wartbarkeit des Antriebs mit sich bringt. Eine Prüfung und Wartung des Antriebs kann damit außerhalb und unabhängig von der Formschließeinheit 10 bzw. Spritzgießmaschine 20 erfolgen. Ein Austausch des Antriebs wird ebenfalls erleichtert, z. B. bei einer Störung des Antriebs oder bei einer gewünschten Performance-Anpassung des Antriebs. Betriebsbedingte Störkräfte, die sich innerhalb der Verstellplatte 90 ergeben und diese verformen, werden zudem dadurch isoliert und nicht bzw. nur in geringem Maß auf den Antrieb übertragen. Dies reduziert den Verschleiß des Antriebs.

Grundsätzlich kann sich damit eine Ölbadschmierung entweder im abschließbaren Hohlraum 100 oder im Gehäuse 110 befinden, das in den abschließbaren Hohlraum 100 der Verstellplatte 90 einsetzbar ist.

Als besonders vorteilhaft hat sich auch erwiesen, dass der Antriebsmotor 80 mit dem Stirnradgetriebe 70 entweder auf der der Formschließeinheit 10 zugewandten Seite der rotierenden Spindelmutter 50 (siehe Fig. 5A) oder der von der Formschließeinheit 10 abgewandten Seite der rotierenden Spindelmutter 50 (siehe Fig. 5 und 6) wirkverbunden ist. Dadurch kann je nach Art des Antriebs bzw. Ausführungsform der Spritzgießmaschine 20 und je nach Ausführung der sonstigen Bauteile der Formschließeinheit 10 ein großer Raum innerhalb der Formschließeinheit 10 bzw. der Spritzgießmaschine 20 zur Verfügung gestellt werden, um eine verbesserte Zugänglichkeit zu den einzelnen Elementen der Formschließeinheit 10 zu ermöglichen.

Das Stirnradgetriebe 70 kann mindestens ein Zwischenrad 75 aufweisen (siehe z. B. Fig. 3). Dadurch ist eine höhere Stirnradgetriebeübersetzung möglich, was eine einfachere Ausführung des Antriebsmotors 80 und höhere Übersetzungen ermöglicht.

Der Verschleiß des Gewindetriebs 60 kann deutlich dadurch reduziert werden, dass dieser als Kugelgewindetrieb, Rollengewindetrieb oder Planetenrollengewindetrieb realisiert ist, die deutlich verbesserte Eigenschaften gegenüber einem Trapezgewindetrieb aufweisen. Durch den Kugelgewindetrieb oder Rollengewindetrieb kann eine hohe Präzision des Antriebs erreicht werden, wohingegen durch den Planetenrollengewindetrieb, insbesondere durch deren sehr große Anzahl an Kontaktpunkten deutlich größere Tragzahlen als bei Kugelgewindetrieben ermöglicht sind. Außerdem sind sie axial steifer, da die Balligkeitsradien der Rollenflanken erheblich größer sind als der Kugelradius bei einem vergleichbaren Kugelgewindetrieb.

Von großem Vorteil ist, wenn die gemeinsame Ölbadschmierung des Gewindetriebs 60 und des Stirnradgetriebes 70 temperierbar ist. Durch den Einsatz eines temperierten ölbadgeschmierten Stirnradgetriebes 70 lässt sich über eine Ölbadtemperier-einheit 170 ein thermisches Gleichgewicht einstellen, wodurch in einer Anlaufphase erwärmt und im Dauerbetrieb gekühlt werden kann und die Spritzgießmaschine 20 schneller in ein Prozessgleichgewicht kommt und somit die Ausschussquote, insbesondere im Einfahrbetrieb minimiert.

Von Vorteil ist auch, wenn die gemeinsame Ölbadschmierung Sensoren S zur Überwachung der Temperatur, der Ölreinheit und/oder der Ölalterung aufweist. Unnötige Wartungen werden dadurch vermieden und Auffälligkeiten der Ölbadschmierung, die den Verschleiß erhöhen könnten, werden schnell und zuverlässig erkannt, so dass eine verschleißbasierte Wartung möglich ist.

Eine Spritzgießmaschine 20 mit einer Formschließeinheit 10 kann somit vorteilhaft mit einem erfindungsgemäßen Antrieb ausgerüstet werden. Dabei umfasst die Formschließeinheit 10 den Antrieb, der mittels des Kreuzkopfs 30 mit einem ersten Ende eines Gelenkmechanismus 120 verbunden ist, wobei ein zweites Ende des Gelenkmechanismus 120 mit einem beweglichen Formträger 130 verbunden ist. Der Antrieb, der Kreuzkopf 30, der Gelenkmechanismus120, der bewegliche Formträger 130 und ein nicht beweglicher Formträger 140 bilden dabei einen Formöffnungs- und Formschließungsmechanismus.

Weiterhin kann die oben beschriebene Spritzgießmaschine 20 mit einer Formschließeinheit 10, die durch einen erfindungsgemäßen Antrieb angetrieben wird, mittels eines Verfahrens betrieben werden, durch das die Spritzgießmaschine 20 jederzeit, insbesondere in einer Anlaufphase der Spritzgießmaschine 20, in einem Prozesszustand gehalten wird, in dem eine von der Temperatur der Ölbadschmierung abhängige Ausschussquote von produzierten Bauteilen minimiert wird. Dabei weist die Spritzgießmaschine 20 eine Steuerung auf, die ausgebildet ist, die Temperatur der Ölbadschmierung zu regeln.

### Bezugszeichenliste

- 10: Formschließeinheit,
- 20: Spritzgießmaschine,
- 30: Kreuzkopf,
- 40: Gewindespindel,
- 50: Spindelmutter,
- 60: Gewindetrieb,
- 70: Stirnradgetriebe,
- 75: Zwischenrad,
- 80: Antriebsmotor,
- 90: Verstellplatte,
- 100: Hohlraum,
- 110: Gehäuse,
- 120: Gelenkmechanismus,
- 130: beweglicher Formträger,
- 140: nicht beweglicher Formträger,
- 150: Maschinenständer,
- 160: Spritzgießeinheit,
- 170: Ölbadtemperiereinheit
- S: Sensoren.

## Patentansprüche

1. Antrieb für eine Formschließeinheit (10) einer Spritzgießmaschine (20) zur Verarbeitung von Kunststoffen und anderer plastifizierbarer Materialien, umfassend eine betrieblich nicht bewegliche Verstellplatte (90), die an einem Maschinenständer (150) der Spritzgießmaschine (20) lagerbar ist, einen Antriebsmotor (80), ein Stirnradgetriebe (70), einen Gewindetrieb (60), der eine rotierende Spindelmutter (50) und eine nicht rotierende Gewindespindel (40) aufweist und diese kraftschlüssig miteinander verbindet, wobei die nicht rotierende Gewindespindel (40) mit einem betrieblich beweglichen Kreuzkopf (30) der Formschließeinheit (10) verbindbar ist, die rotierende Spindelmutter (50) an der betrieblich nicht beweglichen Verstellplatte (90) gelagert und mit dem Stirnradgetriebe (70) verbunden ist, das mit dem Antriebsmotor (80) verbunden ist,
**dadurch gekennzeichnet,**
**dass** der Gewindetrieb (60) und das Stirnradgetriebe (70) in einem abschließbaren Hohlraum (100) der Verstellplatte (90) angeordnet sind und
**dass** der Gewindetrieb (60) und das Stirnradgetriebe (70) eine gemeinsame Ölbadschmierung aufweisen.

2. Antrieb nach Anspruch 1, **dadurch gekennzeichnet, dass** das Stirnradgetriebe (70) auf einer der Formschließeinheit (10) zugewandten Seite der rotierenden Spindelmutter (50) angeordnet ist.

3. Antrieb nach Anspruch 1, **dadurch gekennzeichnet, dass** das Stirnradgetriebe (70) auf einer von der Formschließeinheit (10) abgewandten Seite der rotierenden Spindelmutter (50) angeordnet ist.

4. Antrieb nach einem der vorhergehenden Ansprüche, **dadurch gekennzeichnet, dass** der Gewindetrieb (60) und das Stirnradgetriebe (70) von einem gemeinsamen Gehäuse (110) umgeben sind, das in den abschließbaren Hohlraum (100) der Verstellplatte (90) einsetzbar ist.

5. Antrieb nach einem der vorhergehenden Ansprüche, **dadurch gekennzeichnet, dass** der Antriebsmotor (80) mit dem Stirnradgetriebe (70) entweder auf der der Formschließeinheit (10) zugewandten Seite der rotierenden Spindelmutter (50) oder auf der von der Formschließeinheit (10) abgewandten Seite der rotierenden Spindelmutter (50) verbunden ist.

6. Antrieb nach einem der vorhergehenden Ansprüche, **dadurch gekennzeichnet, dass** das Stirnradgetriebe (70) mindestens ein Zwischenrad (75) aufweist.

7. Antrieb nach einem der vorhergehenden Ansprüche, **dadurch gekennzeichnet, dass** das Stirnradgetriebe (70) so eingerichtet ist, dass es einen Freiraum, vorzugsweise einen Freiraum im Zentrum des Stirnradgetriebes (70) aufweist, durch den die Gewindespindel (40) hindurchtritt oder hindurchtreten kann.

8. Antrieb nach einem der vorhergehenden Ansprüche, **dadurch gekennzeichnet, dass** die gemeinsame Ölbadschmierung durch eine Ölbadtemperiereinheit (170) temperierbar ist.

9. Antrieb nach einem der vorhergehenden Ansprüche, **dadurch gekennzeichnet, dass** die gemeinsame Ölbadschmierung Sensoren (S) zur Überwachung der Temperatur, der Ölreinheit und/oder der Ölalterung aufweist.

10. Formschließeinheit (10) für eine Spritzgießmaschine (20) umfassend einen Antrieb, einen betrieblich beweglichen Kreuzkopf (30), einen Gelenkmechanismus (120), einen beweglichen Formträger (130) und einen nicht beweglichen Formträger (140), wobei der Antrieb mittels des Kreuzkopfs (30) mit einem ersten Ende des Gelenkmechanismus (120) verbunden ist und ein zweites Ende des Gelenkmechanismus (120) mit dem beweglichen Formträger (130) verbunden ist und wobei der Antrieb, der Kreuzkopf (30), der Gelenkmechanismus (120), der bewegliche Formträger (130) und der nicht bewegliche Formträger (140) einen Formöffnungs- und Formschließungsmechanismus bilden, **dadurch gekennzeichnet, dass** der Antrieb der Formschließeinheit (10) nach einem der vorhergehenden Ansprüche ausgebildet ist.

11. Spritzgießmaschine (20) zur Verarbeitung von Kunststoffen und anderer plastifizierbarer Materialien, **dadurch gekennzeichnet, dass** sie einen nach einem der Ansprüche 1 bis 9 ausgebildeten Antrieb für eine Formschließeinheit (10) nach Anspruch 10 aufweist.

12. Verfahren zum Betreiben einer Spritzgießmaschine (20), **dadurch gekennzeichnet, dass** das Verfahren eine Spritzgießmaschine (20) nach Anspruch 11 mit einer Formschließeinheit (10) nach Anspruch 10 und einen Antrieb nach einem der Ansprüche 1 bis 9 umfasst, wobei die Spritzgießmaschine (20) eine Steuerung aufweist, die ausgebildet ist, die Temperatur der Ölbadschmierung zu regeln und dadurch die Spritzgießmaschine (20) jederzeit, insbesondere in einer Anlaufphase der Spritzgießmaschine (20), in einem Prozesszustand zu halten, in dem eine von der Temperatur der Ölbadschmierung abhängige Ausschussquote von produzierten Bauteilen minimiert wird.
